# EUROPEAN PATENT APPLICATION

(11) **EP 4 487 975 A1**
(43) Date of publication of application: **08.01.2025**
(21) Application number: 23763189.0
(22) Date of filing: 07.02.2023
(51) Int. Cl.: B21D 26/033

(54) **ELECTRIC HEATING DEVICE, MOLDING DEVICE, AND ELECTRIC HEATING METHOD**

(30) Priority: 02.03.2022 JP 2022031928
(71) Applicant: Sumitomo Heavy Industries, Ltd., Tokyo 141-6025 (JP)
(72) Inventor: IDE Akihiro, Niihama-shi, Ehime 792-8588 (JP); NOGIWA Kimihiro, Niihama-shi, Ehime 792-8588 (JP); ISHIZUKA Masayuki, Niihama-shi, Ehime 792-8588 (JP)
(74) Representative: Louis Pöhlau Lohrentz
(86) International application number: PCT/JP2023/004063
(87) International publication number: WO 2023/166927

(57) **Abstract**

An electrical heating device is an electrical heating device used for a forming device that performs expansion forming of a metal material, the electrical heating device including: a heating unit that causes a current to flow through the metal material to heat the metal material; and a measurement unit that measures an electrical characteristic value in the heating via the heating unit, in which the heating unit performs temperature control of the metal material based on the electrical characteristic value measured by the measurement unit.

## Description

### Technical Field

The present disclosure relates to an electrical heating device, a forming device, and an electrical heating method.

### Background Art

In the related art, a forming device that forms a heated metal material has been known. For example, PTL 1 discloses a forming device including a die including a pair of a lower die and an upper die, a gas supply unit that supplies a gas into a metal pipe material held between the dies, and a heating unit that heats the metal pipe material by electrical heating.

### Citation List

### Patent Literature

[PTL 1] Japanese Unexamined Patent Publication No. 2009-220141

### Summary of Invention

### Technical Problem

Here, the electrical heating device performs temperature control of electrical heating. As an electrical heating method, a method of performing energization for a certain time set in advance is provided. However, since there are always variations in a shape or a power supply state for each member, a high-accuracy temperature control result cannot be obtained in these methods. In particular, in a case where the metal material is large and a large current is required, the influence of the variations for each metal material is very large. When the influence of the variations for each metal material is large, an energization time is shorter than necessary, and thus a problem that the metal material is not formed into a desired shape may occur. Alternatively, when the energization time is longer than necessary, a problem such as deterioration in power consumption due to an increase in an electrical heating time of the forming device or early consumption of an electrode may occur.

Therefore, an object of the present disclosure is to provide an electrical heating device, a forming device, and an electrical heating method that can accurately perform temperature control regardless of a power supply state and variations in a metal material.

### Solution to Problem

According to an aspect of the present disclosure, there is provided an electrical heating device used for a forming device that performs expansion forming of a metal material, the electrical heating device including: a heating unit that causes a current to flow through the metal material to heat the metal material; and a measurement unit that measures an electrical characteristic value in the heating via the heating unit, in which the heating unit performs temperature control of the metal material based on the electrical characteristic value measured by the measurement unit.

The electrical heating device includes the measurement unit that measures the electrical characteristic value in the heating via the heating unit. The electrical characteristic value has a portion indicating the same behavior in a relationship with the temperature regardless of the power supply state or the variations in the metal material. Therefore, the heating unit performs the temperature control of the metal material based on the electrical characteristic value measured by the measurement unit. Therefore, the heating unit can perform the temperature control with high accuracy regardless of the power supply state or the variations in the metal material, based on the electrical characteristic value. Since it is possible to perform accurate temperature control regardless of the variations in the metal material, it is possible to suppress a problem related to the forming device (the metal material is not formed into a desired shape, the power consumption deteriorates, the electrode is worn, or the like) caused by the energization time being shorter or longer than necessary.

The measurement unit may measure a change point indicating that a change aspect of the electrical characteristic value is changed, and the heating unit may perform the temperature control of the metal material based on a measurement result of the change point via the measurement unit. The change aspect of the electrical characteristic value is greatly changed with an austenite transformation temperature as a boundary. Therefore, the change point indicating that the change aspect of the electrical characteristics is changed indicates that the metal material is at the austenite transformation temperature or a temperature in the vicinity of the austenite transformation temperature regardless of the power supply state or the variations in the metal material. Therefore, the heating unit can perform the temperature control with high accuracy based on the measurement result of the change point.

The heating unit may stop energizing the metal material after a predetermined change amount of the electrical characteristic value is obtained from the measurement of the change point. The electrical characteristic value after the austenite transformation temperature increases at a constant rate regardless of the power supply state or the variations in the metal material. Therefore, the heating unit can stop the energization at a desired target temperature when the electrical characteristic value has a predetermined change amount that has been determined, after the change point is measured.

The heating unit may stop energizing the metal material after a predetermined time has elapsed from the measurement of the change point. The electrical characteristic value after the austenite transformation temperature increases at a constant rate regardless of the power supply state or the variations in the metal material. Therefore, the heating unit can stop the energization at a desired target temperature after the predetermined time that has been determined has elapsed from the measurement of the change point.

According to another aspect of the present disclosure, there is provided a forming device including the electrical heating device described above, in which the forming device forms the heated metal material.

With the forming device, it is possible to obtain the actions and effects having the same meaning as those of the above-described electrical heating device.

According to another aspect of the present disclosure, there is provided an electrical heating method including: a heating process of causing a current to flow through the metal material to heat the metal material; and a measurement process of measuring an electrical characteristic value in the heating via the heating unit, in which in the heating process, temperature control of the metal material is performed based on the electrical characteristic value measured in the measurement process.

With the electrical heating method, it is possible to obtain the actions and effects having the same meaning as those of the above-described electrical heating device.

### Advantageous Effects of Invention

According to the present disclosure, it is possible to provide the electrical heating device, the forming device, and the electrical heating method that can accurately perform the temperature control regardless of the power supply state and the variations in the metal material.

### Brief Description of Drawings

Fig. 1 is a schematic configuration view illustrating a forming device according to an embodiment of the present disclosure.
Fig. 2A is a schematic side view illustrating a heating and expanding unit. Fig. 2B is a sectional view illustrating a state where a nozzle has sealed a metal pipe material.
Fig. 3 is a schematic view illustrating an electrical heating device according to the present embodiment.
Figs. 4A and 4B are graphs illustrating an example of an electrical characteristic value.
Fig. 5 is a graph plotting a relationship between the electrical characteristic value and a time.
Figs. 6A and 6B are graphs illustrating a measurement result.
Fig. 7 is a graph illustrating a change in a resistance value after a change point.
Fig. 8 is a graph illustrating an example of a method in which a measurement unit measures the change point.
Fig. 9 is a graph illustrating an example of a method in which the measurement unit measures the change point.
Fig. 10 is a flowchart illustrating an electrical heating method according to the embodiment of the present disclosure.

### Description of Embodiments

Hereinafter, a preferred embodiment of a forming device according to the present disclosure will be described with reference to the drawings. In the drawings, the same reference numerals will be given to the same portions or equivalent portions, and the redundant description thereof will be omitted.

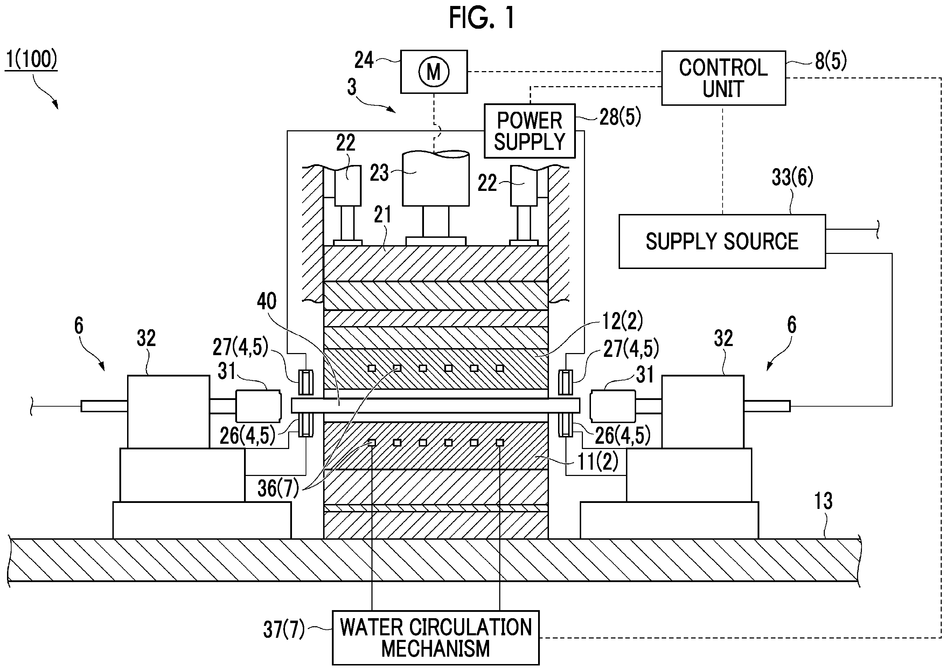

Fig. 1 is a schematic configuration view of a forming device 1 including an electrical heating device 100 according to the present embodiment. As illustrated in Fig. 1, the forming device 1 is a device that forms a metal pipe having a hollow shape by blow forming. In the present embodiment, the forming device 1 is installed on a horizontal plane. The forming device 1 includes a forming die 2, a drive mechanism 3, a holding unit 4, a heating unit 5, a fluid supply unit 6, a cooling unit 7, and a control unit 8. In the present specification, a metal pipe material 40 (metal material) refers to a hollow article before the completion of forming via the forming device 1. The metal pipe material 40 is a steel-type pipe material that can be quenched. In addition, in a horizontal direction, a direction in which the metal pipe material 40 extends during the forming may be referred to as a "longitudinal direction", and a direction perpendicular to the longitudinal direction may be referred to as a "width direction".

The forming die 2 is a die that forms a metal pipe from the metal pipe material 40, and includes a lower die 11 and an upper die 12 that face each other in an up-down direction. The lower die 11 and the upper die 12 are configured by blocks made of steel. Each of the lower die 11 and the upper die 12 is provided with a recessed part in which the metal pipe material 40 is accommodated. In a state where the lower die 11 and the upper die 12 are in close contact with each other (die closed state), the respective recessed parts form a space having a target shape in which the metal pipe material is to be formed. Therefore, surfaces of the respective recessed parts are forming surfaces of the forming die 2. The lower die 11 is fixed to a base stage 13 via a die holder or the like. The upper die 12 is fixed to a slide of the drive mechanism 3 via a die holder or the like.

The drive mechanism 3 is a mechanism that moves at least one of the lower die 11 and the upper die 12. In Fig. 1, the drive mechanism 3 has a configuration of moving only the upper die 12. The drive mechanism 3 includes a slide 21 that moves the upper die 12 such that the lower die 11 and the upper die 12 are joined together, a pull-back cylinder 22 as an actuator that generates a force for pulling the slide 21 upward, a main cylinder 23 as a drive source that downward-pressurizes the slide 21, and a drive source 24 that applies a driving force to the main cylinder 23.

The holding unit 4 is a mechanism that holds the metal pipe material 40 disposed between the lower die 11 and the upper die 12. The holding unit 4 includes a lower electrode 26 and an upper electrode 27 that hold the metal pipe material 40 on one end side in the longitudinal direction of the forming die 2, and a lower electrode 26 and an upper electrode 27 that hold the metal pipe material 40 on the other end side in the longitudinal direction of the forming die 2. The lower electrodes 26 and the upper electrodes 27 on both sides in the longitudinal direction hold the metal pipe material 40 by interposing vicinities of end portions of the metal pipe material 40 from the up-down direction. Upper surfaces of the lower electrodes 26 and lower surfaces of the upper electrodes 27 are formed with groove portions having a shape corresponding to an outer peripheral surface of the metal pipe material 40. Drive mechanisms (not illustrated) are provided in the lower electrodes 26 and the upper electrodes 27 and are movable independently of each other in the up-down direction.

The heating unit 5 heats the metal pipe material 40. The heating unit 5 is a mechanism that heats the metal pipe material 40 by energizing the metal pipe material 40. The heating unit 5 heats the metal pipe material 40 in a state where the metal pipe material 40 is spaced apart from the lower die 11 and the upper die 12, between the lower die 11 and the upper die 12. The heating unit 5 includes the lower electrodes 26 and the upper electrodes 27 on both sides in the longitudinal direction, a power supply 28 that causes a current to flow through the metal pipe material 40 via the electrodes 26 and 27, and the control unit 8 that controls the power supply 28. The heating unit 5 may be disposed in a preceding process of the forming device 1 to perform heating externally.

The fluid supply unit 6 is a mechanism that supplies a high-pressure fluid into the metal pipe material 40 held between the lower die 11 and the upper die 12. The fluid supply unit 6 supplies the high-pressure fluid into the metal pipe material 40 that has been brought into a high-temperature state by being heated by the heating unit 5, to expand the metal pipe material 40. The fluid supply units 6 are provided on both end sides of the forming die 2 in the longitudinal direction. The fluid supply unit 6 includes a nozzle 31 that supplies the fluid from an opening portion of an end portion of the metal pipe material 40 to an inside of the metal pipe material 40, a drive mechanism 32 that moves the nozzle 31 forward and backward with respect to the opening portion of the metal pipe material 40, and a supply source 33 that supplies the high-pressure fluid into the metal pipe material 40 via the nozzle 31. The drive mechanism 32 brings the nozzle 31 into close contact with the end portion of the metal pipe material 40 in a state in which sealing performance is secured during the fluid supply and exhaust, and causes the nozzle 31 to be spaced apart from the end portion of the metal pipe material 40 in other cases. The fluid supply unit 6 may supply a gas such as high-pressure air and an inert gas, as the fluid. Additionally, the fluid supply unit 6 may include the heating unit 5 together with the holding unit 4 including a mechanism that moves the metal pipe material 40 in the up-down direction as the same device.

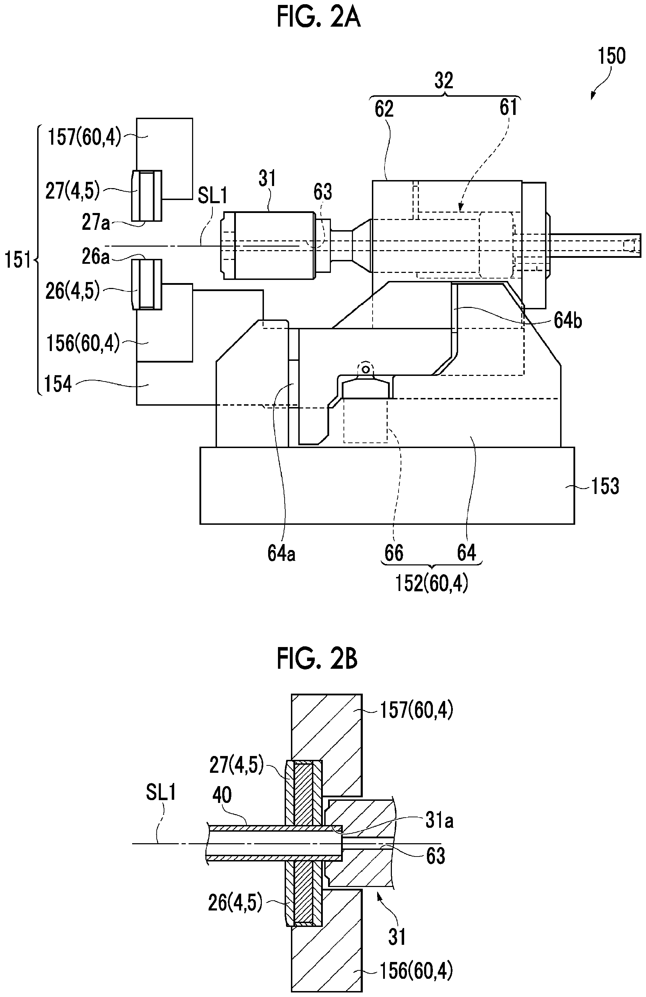

Components of the holding unit 4, the heating unit 5, and the fluid supply unit 6 may be configured as a unitized heating and expanding unit 150. Fig. 2A is a schematic side view illustrating the heating and expanding unit 150. Fig. 2B is a sectional view illustrating a state where the nozzle 31 has sealed the metal pipe material 40.

As illustrated in Fig. 2A, the heating and expanding unit 150 includes the lower electrode 26, the upper electrode 27, an electrode mounting unit 151 in which the electrodes 26 and 27 are mounted, the nozzle 31, the drive mechanism 32, an elevating unit 152, and a unit base 153. The electrode mounting unit 151 includes an elevating frame 154 and electrode frames 156 and 157. The electrode frames 156 and 157 function as a part of a drive mechanism 60 that supports and moves each of the electrodes 26 and 27. The drive mechanism 32 drives the nozzle 31 and moves up and down together with the electrode mounting unit 151. The drive mechanism 32 includes a piston 61 that holds the nozzle 31, and a cylinder 62 that drives the piston. The elevating unit 152 includes an elevating frame base 64 attached to an upper surface of the unit base 153, and an elevating actuator 66 that applies an elevating operation to the elevating frame 154 of the electrode mounting unit 151 by using the elevating frame base 64. The elevating frame base 64 includes guide portions 64a and 64b that guide the elevating operation of the elevating frame 154 with respect to the unit base 153. The elevating unit 152 functions as a part of the drive mechanism 60 of the holding unit 4. The heating and expanding unit 150 includes a plurality of the unit bases 153 of which the upper surfaces have different inclination angles, and is allowed to collectively change and adjust inclination angles of the lower electrode 26, the upper electrode 27, the nozzle 31, the electrode mounting unit 151, the drive mechanism 32, and the elevating unit 152 by replacing the unit bases 153.

The nozzle 31 is a cylindrical member into which the end portion of the metal pipe material 40 can be inserted. The nozzle 31 is supported by the drive mechanism 32 such that a center line of the nozzle 31 coincides with a reference line SL1. An inner diameter of a feed port 31a at an end portion of the nozzle 31 on the metal pipe material 40 side substantially coincides with an outer diameter of the metal pipe material 40 after expansion forming. In this state, the nozzle 31 supplies the high-pressure fluid from an internal flow path 63 to the metal pipe material 40. Examples of the high-pressure fluid include a gas.

Returning to Fig. 1, the cooling unit 7 is a mechanism that cools the forming die 2. The cooling unit 7 can rapidly cool the metal pipe material 40 when the expanded metal pipe material 40 comes into contact with the forming surface of the forming die 2, by cooling the forming die 2. The cooling unit 7 includes flow paths 36 formed inside the lower die 11 and the upper die 12 and a water circulation mechanism 37 that supplies a cooling water and causes the cooling water to circulate through the flow paths 36.

The control unit 8 is a device that controls the entire forming device 1. The control unit 8 controls the drive mechanism 3, the holding unit 4, the heating unit 5, the fluid supply unit 6, and the cooling unit 7. The control unit 8 repeatedly performs the operation of forming the metal pipe material 40 using the forming die 2.

Specifically, the control unit 8 controls, for example, a transport timing from a transport device, such as a robot arm, to dispose the metal pipe material 40 between the lower die 11 and the upper die 12 in an open state. Alternatively, a worker may manually dispose the metal pipe material 40 between the lower die 11 and the upper die 12. Additionally, the control unit 8 controls an actuator of the holding unit 4 and the like such that the metal pipe material 40 is supported by the lower electrodes 26 on both sides in the longitudinal direction, and then the upper electrodes 27 are lowered to interpose the metal pipe material 40. In addition, the control unit 8 controls the heating unit 5 to electrically heat the metal pipe material 40. Therefore, an axial current flows through the metal pipe material 40, and an electric resistance of the metal pipe material 40 itself causes the metal pipe material 40 itself to generate heat due to Joule heat.

The control unit 8 controls the drive mechanism 3 to lower the upper die 12 and bring the upper die 12 close to the lower die 11, thereby closing the forming die 2. Meanwhile, the control unit 8 controls the fluid supply unit 6 to seal the opening portions of both ends of the metal pipe material 40 with the nozzle 31 and supply the fluid. Therefore, the metal pipe material 40 softened by the heating expands and comes into contact with the forming surface of the forming die 2. Then, the metal pipe material 40 is formed to follow a shape of the forming surface of the forming die 2. In addition, in a case where a metal pipe with a flange is formed, a part of the metal pipe material 40 is made to enter a gap between the lower die 11 and the upper die 12, and then die closing is further performed to crush the entering part to form a flange portion. When the metal pipe material 40 comes into contact with the forming surface, the metal pipe material 40 is quenched by being rapidly cooled by using the forming die 2 cooled by the cooling unit 7.

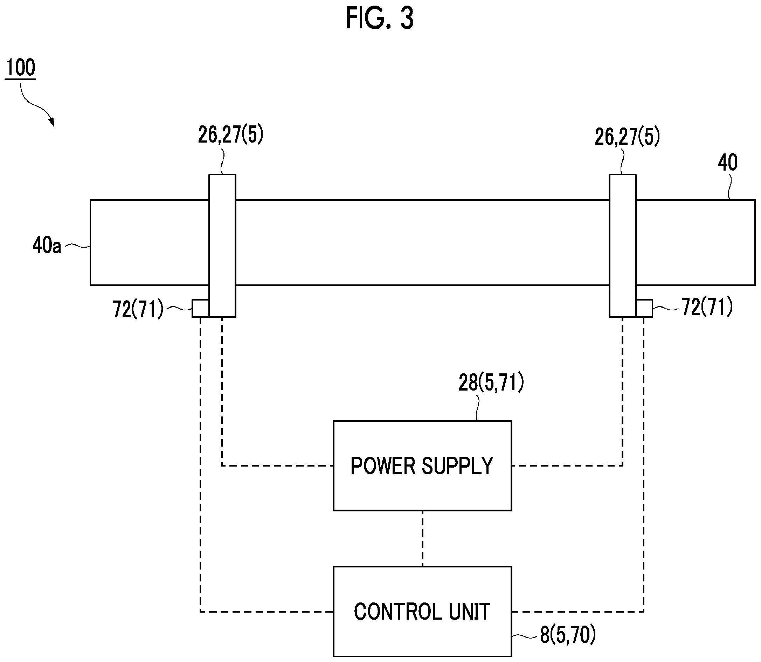

Hereinafter, the electrical heating device 100 according to the present embodiment will be described in detail with reference to Fig. 3. The electrical heating device 100 is a device used in the forming device 1 that performs the expansion forming of the metal material. As illustrated in Fig. 3, the electrical heating device 100 includes the heating unit 5 and a measurement unit 70. As described above, the heating unit 5 includes two sets of the electrodes 26 and 27, the power supply 28, and the control unit 8.

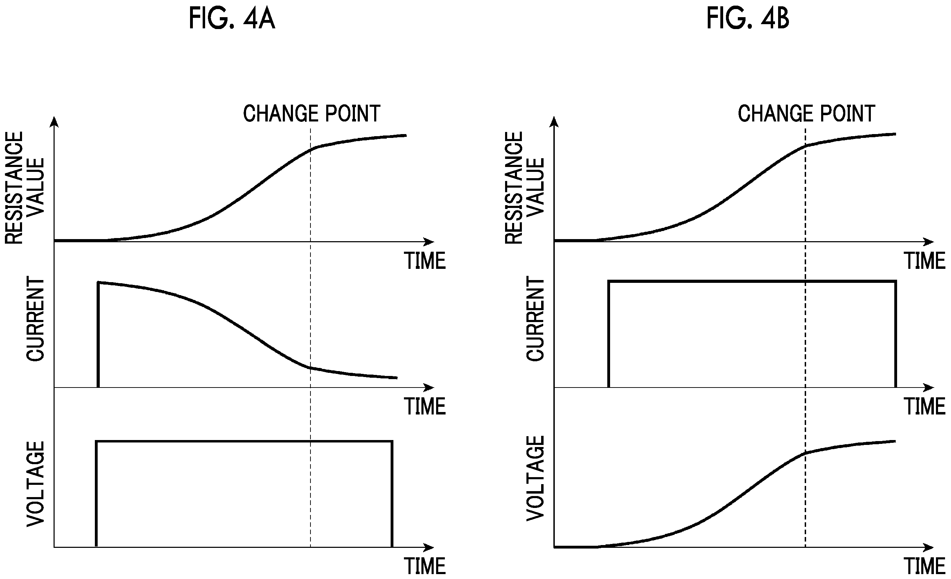

The measurement unit 70 measures an electrical characteristic value in the heating via the heating unit 5. The measurement unit 70 includes an information acquisition unit 71 that acquires information for measuring the electrical characteristic value, and a control unit 8 that calculates the electrical characteristic value based on the information acquired by the information acquisition unit 71. The electrical characteristic value measured by the measurement unit 70 need only be a value that is changed from the start of the energization to the stop of the energization, and examples thereof include a resistance value, a current value, a voltage value, and a power value. For example, in a case where the control unit 8 performs constant voltage control, as illustrated in Fig. 4A, the resistance value increases with the elapse of time, and the current value (power value) decreases with the elapse of time. Therefore, in a case where the constant voltage control is performed, the measurement unit 70 need only measure any of the resistance value, the current value, and the power value as the electrical characteristic value. In a case where the control unit 8 performs constant current control, as illustrated in Fig. 4B, the resistance value increases with the elapse of time, and the voltage value (power value) increases with the elapse of time. Therefore, in a case where the constant current control is performed, the measurement unit 70 need only measure any of the resistance value, the voltage value, and the power value as the electrical characteristic value.

In a case where the power supply 28 is a device capable of outputting the voltage value or the current value during the electrical heating, the power supply 28 functions as the information acquisition unit 71. In this case, the power supply 28 outputs the voltage value or the current value to the control unit 8. The information acquisition unit 71 may include a measurement instrument 72. The measurement instrument 72 is provided in the electrodes 26 and 27 on both sides, and can measure a value of the voltage applied to the metal pipe material 40 or a value of the current flowing through the metal pipe material 40. The control unit 8 may measure the information acquired from the information acquisition unit 71 as the electrical characteristic value as it is, or may measure the electrical characteristic value by performing a calculation using the information acquired from the information acquisition unit 71.

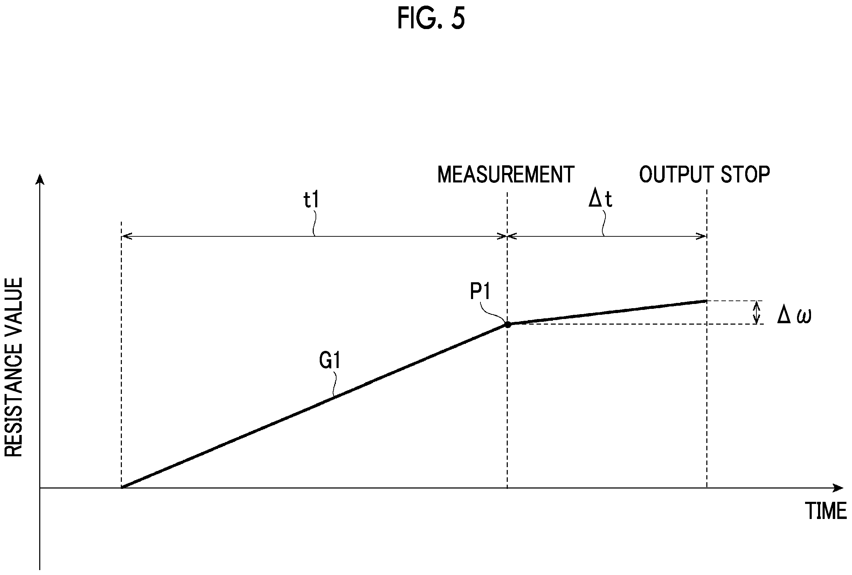

In a case where the resistance value is measured as the electrical characteristic value, a graph G1 in which a relationship between the resistance value and the time is plotted is illustrated in Fig. 5. In the graph G1, a vertical axis indicates the resistance value and a horizontal axis indicates the time. The graph G1 illustrated in Fig. 5 is illustrated in a deformed state for easy understanding. The resistance value increases at a certain change rate (slope of the graph G1) for a time t1 from the start of the heating. At a change point P1, the resistance value increases at the change rate (slope of the graph G1) smaller than that of the time t1. The change point P1 is a point indicating that a change aspect of the electrical characteristic value (here, the resistance value) of the metal pipe material is changed. A displacement amount increases until the output of the power supply 28 is stopped after the change point P1.

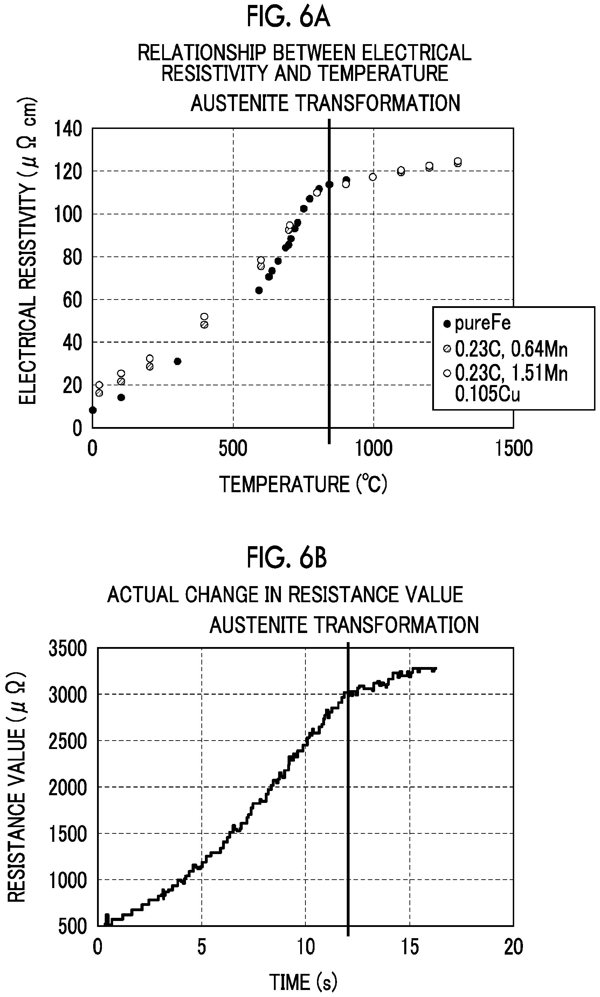

Here, Fig. 6A is a graph illustrating a relationship between an electrical resistivity and a temperature. In Fig. 6A, the electrical resistivity of the metal pipe material 40 of a different material during the heating is plotted. As illustrated in Fig. 6A, the behavior of the resistance value (electrical characteristic value) is greatly changed with an austenite transformation temperature as a boundary. An austenite transformation temperature CT illustrated in Fig. 6A is approximately 720°C. Since the austenite transformation temperature CT is a physical property, the austenite transformation temperature CT is always constant regardless of a size or a power supply state of a heating target. Therefore, in Fig. 6A, a point indicating that the change aspect is changed, such as the resistance value being changed at a smaller change rate from a state of being changed at a predetermined change rate, indicates that the metal material is at the austenite transformation temperature regardless of the power supply state or the variations in the metal material or that the metal material is at the temperature in the vicinity of the austenite transformation temperature. The temperature in the vicinity of the change point P1 in Fig. 5 is a temperature close to the austenite transformation temperature regardless of the shape or the power supply state of the metal pipe material 40. Therefore, the temperature can be estimated by measuring the change point P1 via the measurement unit 70.

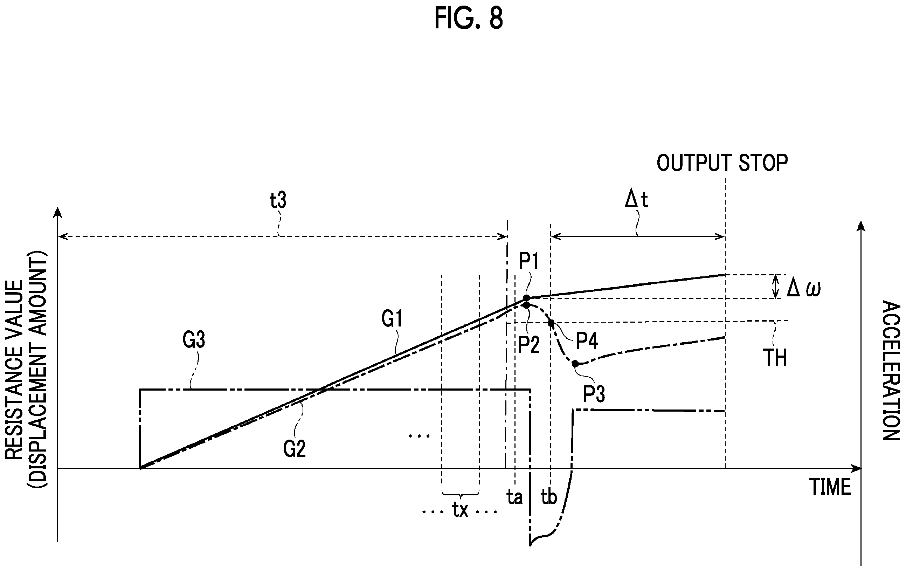

The change point P1 in the graph G1 may be set at any position as long as the change point P1 is a point indicating that the change aspect of the electrical characteristic value of the metal pipe material 40 is changed. For example, when a graph (graph G2 in Fig. 8) of the displacement amount is created by differentiating the graph G1 of the resistance value, a point (maximum point) at which the change amount is switched from an increasing state to a decreasing state may be used as the change point P1. Alternatively, when the graph G1 is twice differentiated to create a graph (graph G3 in Fig. 8) of the acceleration, a point at which the acceleration is switched from positive to negative may be used as the change point P1. Since an actual change in the resistance value includes noise as illustrated in Fig. 6B, the vertical fluctuations in the resistance value due to the noise may be ignored, and the resistance value may be converted into an approximation line or the like, and then the change point P1 may be measured.

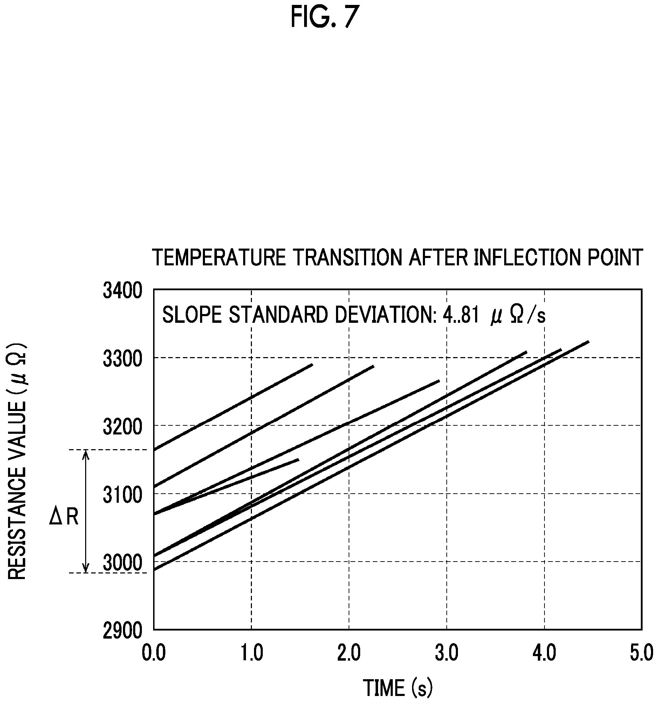

In addition, as illustrated in Fig. 7, a slope of the temperature rise after the change point is constant regardless of the shape or the power supply state of the metal material. In addition, ΔR in Fig. 7 is a variation in the resistance value caused by the shape or the power supply state of the metal material. In the present embodiment, since the change point P1 is measured and controlled instead of an absolute value of the resistance value, it is possible to prevent the influence of the variation in the resistance value. As illustrated in Fig. 5, when the measurement unit 70 measures the change point P1 and then the heating is performed for a predetermined time Δt that has been determined in advance, the metal pipe material 40 can be heated to a desired target temperature. Alternatively, when the measurement unit 70 measures the change point P1 and then the heating is performed until the resistance value is changed by a predetermined change amount Δω that has been determined in advance, the metal pipe material 40 can be heated to a desired target temperature.

As described above, the measurement unit 70 measures the change point P1 indicating that the change aspect of the electrical characteristic value is changed. The heating unit 5 performs the temperature control of the metal pipe material 40 based on the electrical characteristic value measured by the measurement unit 70. The heating unit 5 performs the temperature control of the metal pipe material 40 based on the measurement result of the change point P1 via the measurement unit 70. Specifically, the heating unit 5 stops energizing the metal pipe material 40 after the predetermined time Δt that has been determined in advance has elapsed from the measurement of the change point P1. The predetermined time Δt is set in consideration of a time required to reach the target temperature from the austenite transformation temperature. Alternatively, the heating unit 5 stops energizing the metal pipe material 40 after the resistance value reaches the predetermined change amount Δω that has been determined in advance, after the change point P1 is measured. The predetermined change amount Δω is set in consideration of the change amount required to reach the target temperature from the austenite transformation temperature.

A specific temperature control content will be described with reference to Fig. 8. Fig. 8 illustrates an example in which the measurement unit 70 measures the change point P1 of the resistance value. Fig. 8 illustrates a method of measuring the change point P1 using the graph G2 illustrating the displacement amount of the resistance value and a method of measuring the change point P1 using the graph G3 illustrating the acceleration of the resistance value.

First, an example in a case where the measurement unit 70 measures the change point P1 using the displacement amount of the resistance value will be described. As illustrated in Fig. 8, the description will be made on the assumption that a time when a maximum point P2 of the graph G2 of the displacement amount is generated and a time when the change point P1 is generated coincide with each other. As illustrated in Fig. 8, the control unit 8 of the measurement unit 70 calculates the displacement amount by differentiating the resistance value at a constant time interval tx. Before the time when reaching the maximum point P2, the control unit 8 measures the displacement amount that monotonically increases at the time interval tx. For example, at a time ta immediately before reaching the maximum point P2, the control unit 8 measures a large displacement amount. On the other hand, the displacement amount sharply decreases after the time when reaching the maximum point P2. Therefore, at a time tb following the time ta, the control unit 8 measures a value lower than a value of the displacement amount at the time ta.

The control unit 8 measures the change point P1 by measuring the maximum point P2 in a case where the measured displacement amount is a value lower than that of the previous time and is a value equal to or lower than a threshold value TH. A measurement point P4 between the maximum point P2 and the minimum point P3 is measured by the control unit 8 at the time tb. However, in a case where the measurement point P4 is measured, it can be detected that the measurement point P4 is immediately after passing through the maximum point P2 (that is, the change point P1). In this way, detecting that the measurement point P4 is immediately after passing through the change point P1 is also included in the measurement of the change point P1 via the measurement unit 70. Next, the control unit 8 stops the energization when the predetermined time Δt has elapsed from the time tb at which the maximum point P2 has been measured. Alternatively, the control unit 8 stops the energization when the resistance value is changed by the predetermined change amount Δω from the resistance value when the change point P1 is measured.

The time interval tx is not particularly limited, but the measurement accuracy of the maximum point P2 is higher as the time interval tx is smaller. The time interval tx is preferably smaller than the time interval between the maximum point P2 and the minimum point P3 in the graph G2. The displacement amount does not decrease from immediately after the start of the heating to when the displacement amount reaches the maximum point P2. Therefore, a predetermined time from the start of the heating may be set as an ignoring period t3. In the ignoring period t3, the control unit 8 need not perform the calculation of the displacement amount or the comparison with the previous value.

Next, an example in a case where the measurement unit 70 measures the change point P1 using the acceleration of the resistance value will be described. As illustrated in Fig. 8, the description will be made on the assumption that a time when the acceleration is switched from positive to negative in the graph G3 of the acceleration and the time when the change point P1 is generated coincide with each other. As described above, the control unit 8 of the measurement unit 70 calculates the acceleration at the constant time interval tx. The acceleration is acceleration of the change in the resistance value.

The control unit 8 calculates the acceleration by differentiating the displacement amount. Before the time when reaching the change point P1, the control unit 8 measures constant acceleration at the time interval tx. At the change point P1, the acceleration sharply decreases from positive to negative. For example, the control unit 8 measures positive acceleration at the time ta immediately before reaching the change point P1. On the other hand, at the timing immediately after the change point P1, the acceleration is negative. Therefore, the control unit 8 measures the negative acceleration at the time tb after the time ta.

In a case where the measured acceleration is negative, the control unit 8 measures the change point P1. Next, the control unit 8 stops the energization when the predetermined time Δt has elapsed from the time tb at which the change point P1 has been measured. Alternatively, the control unit 8 stops the energization when the resistance value is changed by the predetermined change amount Δω from the resistance value when the change point P1 is measured.

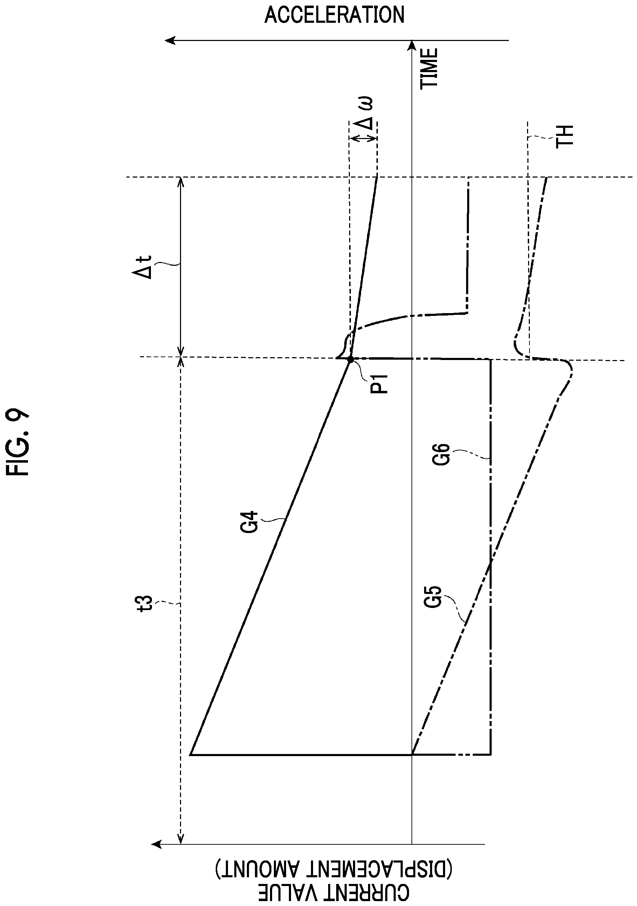

Fig. 9 illustrates an example in a case where the measurement unit 70 measures the change point P1 using the current value as the electrical characteristic value when the constant voltage control is performed. Fig. 9 illustrates a graph G4 indicating a change in the current value, a graph G5 indicating a displacement amount of the current value, and a graph G6 indicating acceleration of the current value. In this case, since the current value decreases with the elapse of time, the measurement unit 70 and the control unit 8 perform the same processes as in Fig. 8 except that the positive and the negative in the graph G5 of the displacement amount and the graph G6 of the acceleration are opposite to those of the graphs G2 and G3 illustrated in Fig. 8.

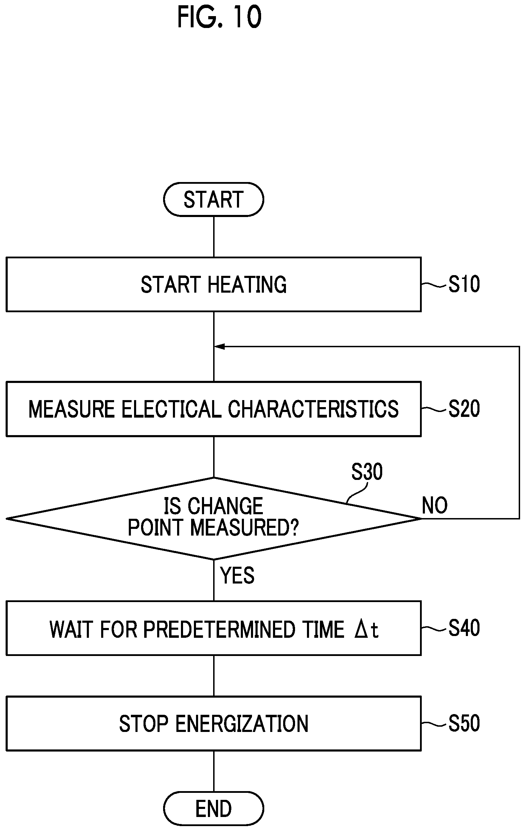

Hereinafter, an electrical heating method according to the present embodiment will be described with reference to Fig. 10.

First, the heating unit 5 causes the current to flow through the metal pipe material 40 to heat the metal pipe material 40 (step S10: heating process), and then the measurement unit 70 measures the electrical characteristic value in the heating via the heating unit 5 (step S20: measurement process). Next, the measurement unit 70 determines whether or not the change point P1 is measured (S30: measurement process). In a case where it is determined in step S30 that the change point P1 is not measured, the measurement unit 70 returns to step S20 and measures the electrical characteristics again at a predetermined timing.

In a case where it is determined in step S30 that the change point P1 is measured, the heating unit 5 waits for a predetermined time Δt that has been determined in advance (step S40: heating process).

During this time, the heating unit 5 continues the electrical heating. Next, the heating unit 5 stops the electrical heating after the predetermined time Δt has elapsed (step S50: heating process). In this way, in the heating process, the temperature control of the metal pipe material 40 is performed based on the electrical characteristic value measured in the measurement process.

Hereinafter, the actions and effects of the electrical heating device 100 and the electrical heating method according to the present embodiment will be described.

The electrical heating device 100 includes the measurement unit 70 that measures the electrical characteristic value in the heating via the heating unit 5. The electrical characteristic value has a portion indicating the same behavior in a relationship with the temperature regardless of the power supply state or the variations in the metal material. Therefore, the heating unit 5 performs the temperature control of the metal material based on the electrical characteristic value measured by the measurement unit 70. In this manner, the heating unit 5 can perform the temperature control with high accuracy regardless of the power supply state or the variations in the metal material based on the electrical characteristic value. Since it is possible to perform accurate temperature control regardless of the variations in the metal material, it is possible to suppress a problem related to the forming device (the metal material is not formed into a desired shape, the power consumption deteriorates, the electrode is worn, or the like) caused by the energization time being shorter or longer than necessary.

The measurement unit 70 may measure the change point indicating that the change aspect of the electrical characteristic value is changed, and the heating unit 5 may perform the temperature control of the metal material based on the measurement result of the change point via the measurement unit 70. The change aspect of the electrical characteristic value is greatly changed with the austenite transformation temperature as a boundary. Therefore, the change point P1 indicating that the change aspect of the electrical characteristics is changed indicates that the metal material is at the austenite transformation temperature or a temperature in the vicinity of the austenite transformation temperature regardless of the power supply state or the variations in the metal material. Therefore, the heating unit 5 can perform the temperature control with high accuracy based on the measurement result of the change point P1.

The heating unit 5 may stop energizing the metal material after the predetermined change amount of the electrical characteristic value is obtained from the measurement of the change point P1. The electrical characteristic value after the austenite transformation temperature increases at a constant rate regardless of the power supply state or the variations in the metal material. Therefore, the heating unit 5 can stop the energization at a desired target temperature when the electrical characteristic value has the predetermined change amount that has been determined, after the change point P1 is measured.

The heating unit 5 may stop energizing the metal material after the predetermined time has elapsed from the measurement of the change point P1. The electrical characteristic value after the austenite transformation temperature increases at a constant rate regardless of the power supply state or the variations in the metal material. Therefore, the heating unit 5 can stop the energization at a desired target temperature after the predetermined time that has been determined, has elapsed from the measurement of the change point P1.

The forming device 1 according to the present embodiment includes the electrical heating device 100, and forms the heated metal material.

With the forming device 1, it is possible to obtain the actions and effects having the same meaning as those of the electrical heating device 100.

The electrical heating method according to the present embodiment is an electrical heating method used for a forming device 1 that performs expansion forming of a metal material, the electrical heating method including: a heating process of causing a current to flow through the metal material to heat the metal material; and a measurement process of measuring an electrical characteristic value in the heating via the heating unit, in which in the heating process, temperature control of the metal material is performed based on the electrical characteristic value measured in the measurement process.

With the electrical heating method, it is possible to obtain the actions and effects having the same meaning as those of the electrical heating device 100.

The present disclosure is not limited to the above-described embodiment described above.

The forming device need only be any forming device that heats the metal material, and a forming device using a hot stamping method may be adopted. In this case, the metal material is a plate material.

### Reference Signs List

- 1: forming device
- 5: heating unit
- 40: metal pipe material (metal material)
- 70: measurement unit
- 100: electrical heating device

## Claims

1. An electrical heating device used for a forming device that performs expansion forming of a metal material, the electrical heating device comprising:
a heating unit that causes a current to flow through the metal material to heat the metal material; and
a measurement unit that measures an electrical characteristic value in the heating via the heating unit,
wherein the heating unit performs temperature control of the metal material based on the electrical characteristic value measured by the measurement unit.

2. The electrical heating device according to claim 1,
wherein the measurement unit measures a change point indicating that a change aspect of the electrical characteristic value is changed, and
the heating unit performs the temperature control of the metal material based on a measurement result of the change point via the measurement unit.

3. The electrical heating device according to claim 2,
wherein the heating unit stops energizing the metal material after a predetermined change amount of the electrical characteristic value is obtained from the measurement of the change point.

4. The electrical heating device according to claim 2,
wherein the heating unit stops energizing the metal material after a predetermined time has elapsed from the measurement of the change point.

5. A forming device comprising:
the electrical heating device according to any one of claims 1 to 4,
wherein the forming device forms the heated metal material.

6. An electrical heating method used for a forming device that performs expansion forming of a metal material, the electrical heating method comprising:
a heating process of causing a current to flow through the metal material to heat the metal material; and
a measurement process of measuring an electrical characteristic value in the heating via the heating unit,
wherein in the heating process, temperature control of the metal material is performed based on the electrical characteristic value measured in the measurement process.
